# EUROPÄISCHE PATENTSCHRIFT

(11) **EP 1 451 772 B1**
(45) Veröffentlichungstag und Bekanntmachung des Hinweises auf die Patenterteilung: **06.04.2005**
(21) Anmeldenummer: 02803006.2
(22) Anmeldetag: 11.11.2002
(51) Int. Cl.: G06K 19/077

(54) **INTELLIGENTES ETIKETT**
INTELLIGENT LABEL
ETIQUETTE INTELLIGENTE

(30) Priorität: 14.11.2001 DE 10155935
(43) Veröffentlichungstag der Anmeldung: 01.09.2004
(73) Patentinhaber: Infineon Technologies AG, 81669 München (DE)
(72) Erfinder: JUNG, Stefan, 81249 München (DE); LAUTERBACH, Christl, 85635 Höhenkirchen-Siegertsbrunn (DE)
(74) Vertreter: Müller-Boré & Partner Patentanwälte
(86) Internationale Anmeldenummer: PCT/EP2002/012577
(87) Internationale Veröffentlichungsnummer: WO 2003/042911

(56) Entgegenhaltungen:
- WO-A-01/45038
- WO-A-98/28722
- US-A- 5 745 988

## Beschreibung

Die Erfindung betrifft eine Vorrichtung mit einem elektronischen Bauelement in einer textilen Umgebung gemäß Anspruch 1 sowie ein Herstellungsverfahren einer Vorrichtung gemäß Anspruch 16.

"Intelligente Etiketten", sogenannte Smart Labels, werden im Textilbereich zukünftig eine große Bedeutung im Rahmen der Logistik des Herstellungsprozesses, des Vertriebs und der Pflege bzw. Reinigung von Textilien erlangen. Solch eine Verwendung von intellegenten Etiketten im Textil bereich ist beispielsweise in den Dokumenten WO-A-01 45038, WO-A-98 28722 oder US-A-5 745 988 beschrieben. Diese Etiketten können mit kontaktlos abfragbaren Transpondersystemen (sogenannte RFID-Tags) ausgerüstet werden, über welche beispielsweise textilspezifische Informationen abrufbar sind. Als bevorzugte Anwendungsgebiete für derartig ausgerüstete Textilien kommt beispielsweise eine entsprechende Kennzeichnung von Mietwäsche, von Wäsche in Wäschereien oder in der Lagerhaltung in Betracht. Von besonderer Bedeutung in diesem Zusammenhang ist, daß das "intelligente Etikett" resistent gegenüber den üblicherweise eingesetzten Herstellungs- und Reinigungsverfahren von Textilien ist sowie dem bestimmungsgemäßen Gebrauch der Textilien standhält. Wenn es sich bei den so gekennzeichneten Textilien um Bekleidungsstücke handelt, sollen sie ferner den Trage- und Nutzungskomfort derselben nicht mindern.

Herkömmliche "intelligente Etiketten" (Smart Labels) bestehen typischerweise aus einem kleinen Siliziumchip, der einen Prozessor, eine Vorrichtung zur Datenübertragung (beispielsweise einen Modulator) und einen begrenzten Speicher zur Aufnahme spezifischer Daten beinhaltet. Ferner ist eine integrierte Spule vorgesehen, die zusammen mit einem Kondensator und dem Siliziumchip einen Schwingkreis bildet, dessen Resonanzfrequenz auf eine bestimmte Frequenz abgestimmt ist. Typische verwendete Frequenzen betragen 13, 56 MHz sowie 135 kHz. Die Spule, welche eine elektrische Leiterschleife mit einer oder mehreren Windungen ist, wird für den Leseprozeß des kontaktlosen Transpondersystems in das magnetische Wechselfeld einer Sendeantenne gebracht, so daß eine induktive Kopplung zwischen dem Sender und der Antennenspule des "intelligenten Etiketts" aufgebaut wird. Durch das magnetische Wechselfeld wird in der Spule eine elektrische Spannung induziert, welche gleichgerichtet zur Spannungsversorgung eines integrierten Transponderschaltkreises (Transponder-ICs bzw. RFID-Chips) verwendet wird. Für gängige Frequenzen und zulässige Feldstärken sind Schleifenflächen von etwa 25 cm² sowie 1 bis 10 Spulenwindungen üblich.

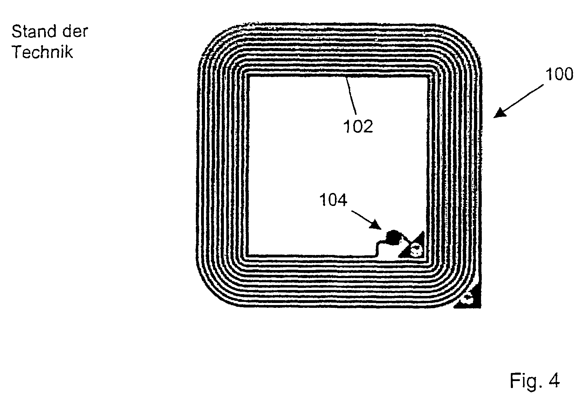

Ein solches herkömmliches "intelligentes Etikett" ist in Fig. 4 dargestellt. Die Spule 100 besteht aus auf eine dünne (in Fig. 4 nicht sichtbare) Kunststoffolie aufgebrachte metallische Leiterbahnen 102 in einer planaren Anordnung mit Spiralenstruktur. Die metallischen Leiterbahnen 102 können entweder aufgedruckt oder durch einen Lithographieschritt und einen anschließenden Ätzprozeß aus einer beispielsweise mit Kupfer beschichteten Folie herausgeätzt werden. Typischerweise schließt sich an den Strukturierungsprozeß eine galvanische Verstärkung der Leiterbahnen 102 zur Erzielung eines niedrigeren Serienwiderstandes der Spule 100 an. Der Transponder-IC 104 (der sogenannte RFID-Chip) wird auf einer Seite der Spule 100 kontaktiert. Auf der Rückseite der Folie befindet sich eine (in Fig. 4 nicht dargestellte) Metallbrücke, die durchkontaktiert werden muß um eine Verbindung der beiden Spulenenden mit dem Chip 104 zu realisieren.

Derartige herkömmliche "intelligente Etiketten" leiden unter dem aufwendigen Strukturierungsprozeß sowie dem hohen Serienwiderstand der Spule, welcher eine schlechte Güte des Resonanzschwingkreises zur Folge hat. Ferner benötigt die planare Spule eine verhältnismäßig große Fläche, da die Spulenwindungen nebeneinander angeordnet werden müssen. Besonders nachteilig ist jedoch, daß die Spule auf eine Trägerfolie aufgebracht werden muß, die relativ steif und für textile Applikationen schlecht geeignet ist. Eine derartige Spule, welche auf einer Trägerfolie aufgebracht ist, stellt einen Fremdkörper in textilen Anwendungen dar, welcher insbesondere den Tragekomfort eines Kleidungsstücks herabsetzt. Zudem sind herkömmliche Spulensysteme auf Folienbasis in textilen Applikationen nicht langzeitstabil, da sie den typischerweise auftretenden Belastungen (beispielsweise Dehnen, Falten, Bügeln, Waschzyklen, Temperaturänderungen sowie Feuchtigkeitsbelastungen) nur beschränkt widerstehen können. Ferner ist ein derartiges "intelligentes Etikett" sicht- und/oder fühlbar, was insbesondere bei Verwendungen in Bekleidungsstücken störend sein kann und einen Einsatz als Fälschungs- und/oder Diebstahlschutz beispielsweise in hochwertigen Bekleidungsmarkenartikeln erschwert.

Im Stand der Technik werden ferner kontaktlose Transpondersysteme für "intelligente Etiketten" eingesetzt, bei welchen der Transponder-IC in einer münzenförmigen, harten Kunststoffscheibe untergebracht ist, in welcher sich auch die Antennenspule befindet. Derartige herkömmliche Systeme lassen sich noch schlechter als die eingangs beschriebenen folienbasierten Systeme in textile Umgebungen einbetten.

Angesichts der genannten Nachteile des Standes der Technik ist es Aufgabe der Erfindung, eine Vorrichtung, insbesondere ein "intelligentes Etikett" (ein sogenanntes Smart Label), anzugeben, welches gut in eine textile Umgebung integriert werden kann und den darin auftretenden Belastungen standhält. Aufgabe der Erfindung ist ferner die Angabe eines entsprechenden Herstellungsverfahrens einer solchen Vorrichtung.

Diese Aufgabe wird gelöst durch eine Vorrichtung mit den Merkmalen von Anspruch 1 sowie durch ein Verfahren gemäß Anspruch 16. Die Oberbegriffe der genannten Ansprüche sind hierbei durch die Merkmale aus WO-A-01 45 038 gebildet. Bevorzugte Ausführungsformen sind Gegenstand der abhängigen Ansprüche.

Erfindungsgemäß umfaßt eine Vorrichtung, insbesondere ein "intelligentes Etikett" für Textilien,
- zumindest einen textilen Träger;
- zumindest einen flexiblen draht- und/oder fadenartigen elektrischen Leiter,
- zumindest ein elektronisches Bauelement, welches mit einer Anschlußstelle des Leiters elektrisch verbunden ist;
wobei der Leiter an oder in dem textilen Träger angeordnet ist, wobei der textile Träger ein Gewebe ist, und wobei das Gewebe zumindest einen elektrisch leitfähigen Schuß- und Kettfaden aufweist und der Leiter zumindest einen elektrisch leitfähigen Schuß- und Kettfaden des Geweben umfaßt, welche an ihrem Kreuzpunkt derart elektrisch Leitförmig verbunden sind, daß der Leiter eine elektrisch leitfähige Spule bildet.

Erfindungsgemäß ist somit der Leiter, bei welchem es sich beispielsweise um eine spiralenförmige Antennenspule eines Transpondersystems handeln kann, flexibel und weist einen draht- und/oder fadenartigen Aufbau auf. Diese flexiblen Eigenschaften des Leiters gestatten es, daß dieser unmittelbar in oder an einem textilen Träger angeordnet werden kann. Im Unterschied zu bekannten "intelligenten Etiketten" stellt die erfindungsgemäße Vorrichtung keinen Fremdkörper in einer textilen Umgebung dar, da weder eine Trägerfolie noch ein hartes Gehäuse verwendet werden muß. Eine erfindungsgemäße Vorrichtung weist folglich einen erheblich verbesserten Tragekomfort sowie vorteilhaftere Belastungseigenschaften verglichen mit den eingangs erläuterten herkömmlichen "intelligenten Etiketten" auf.

Des weiteren ist der textile Träger ein Gewebe. Unter einem Gewebe wird hierbei ein textiles Flächengebilde aus zwei sich insbesondere rechtwinklig kreuzenden Fadensystemen verstanden, welche - wie üblich - als Kette und Schuß bezeichnet werden. Die Kette liegt in Längsrichtung des Webprozesses während die Schußrichtung quer zur Webrichtung verläuft. Der textile Träger kann beispielsweise ein Gewebeabschnitt sein, welcher zusammen mit dem an oder in diesem angeordneten Leiter oder Leitern beispielsweise auf ein zu kennzeichnendes Textil anbringbar ist. Alternativ kann der textile Träger auch selbst das Textil darstellen, welches mit einer erfindungsgemäßen Vorrichtung versehen werden soll.

Gemäß der Erfindung weist das Gewebe zumindest einen elektrisch leitfähigen Schuß- und/oder Kettfaden auf und der Leiter umfaßt zumindest einen elektrisch leitfähigen Schuß- und/oder Kettfaden des Gewebes. In diesem Fall ist der Leiter in dem textilen Träger angeordnet und stellt selbst einen Teil des Gewebes dar, aus welchem der textile Träger besteht. Dadurch daß der Leiter, bei welchem es sich beispielsweise um eine Antennenspule für einen Transponder-IC handeln kann, Bestandteil des textilen Trägers selbst ist, läßt sich eine derartige erfindungsgemäße Vorrichtung besonders gut in eine textile Umgebung einbetten.

Der Leiter umfaßt zumindest einen elektrisch leitfähigen Schuß- und zumindest einen elektrisch leitfähigen Kettfaden, welche an ihrem Kreuzungspunkt elektrisch leitfähig miteinander verbunden sind. Beispielsweise können in einer einfachen textilen Gewebestruktur zwei senkrecht zueinander verlaufende und voneinander unabhängige Verdrahtungsebenen durch entsprechende elektrisch leitfähige Schuß- und Kettfäden vorgesehen sein, welche an ihren Kreuzungspunkten gezielt elektrisch miteinander verbunden werden können. Der Kontaktierungsprozeß eines Schuß- mit einem Kettfaden an deren Kreuzungspunkt kann beispielsweise durch einen Stempel oder eine Walze, insbesondere durch einen Schmelz-, Löt- oder Klebevorgang erfolgen. Durch geeignete elektrische Verbindungen von Kett- und Schußfäden kann somit ein komplexer Verlauf des elektrischen Leiters in einfacher Weise in dem Gewebe erzeugt werden.

Vorzugsweise umfaßt der Leiter eine Vielzahl von elektrisch leitfähigen Schuß- und Kettfäden, welche teilweise an ihren Kreuzungspunkten derart elektrisch leitfähig verbunden sind, daß der Leiter eine elektrisch leitfähige Spule bildet. Eine derartige in dem textilen Träger angeordnete Spule weist typischerweise eine rechteckige Spiralform auf und stellt eine planare Leiteranordnung dar. Vorzugsweise sind die elektrisch leitfähigen Schuß- bzw. Kettfäden von einer Isolierummantelung umgeben, so daß unerwünschte Kurzschlüsse an Kreuzungspunkten von Schuß und Kette in einfacher Weise vermieden werden können. Durch die Wahl eines geeigneten Punktkontaktierungsmusters von Kett- und Schußfäden kann das bei herkömmlichen, folienbasierten planaren Spulen auftretende Problem der "Rückverdrahtung" in einfacher Weise ohne Brücke gelöst werden. Obwohl es sich somit wie im Stand der Technik um eine im wesentlichen planare Leiteranordnung handelt, ist anders als bei folienbasierten Spulen keine Brücke zur Rückführung des innerhalb der Spirale liegenden Kontakt zu dem äußeren (oder umgekehrt) nötig.

Vorzugsweise weist der Leiter zwei die Spulenanschlüsse bildende Anschlußstellen auf, welche mit dem elektronischen Bauelement elektrisch verbunden sind. Die Anschlußstellen des Leiters können beispielsweise Schuß- und/oder Kettfäden sein, welche beispielsweise durch einen Löt- oder Klebeschritt mit Kontaktflächen des elektronischen Bauelements verbunden sind.

Vorzugsweise ist der elektrisch leitfähige Schuß- und/oder Kettfaden ein elektrisch leitfähiges Garn, welches aus elektrisch isolierenden Fasern und zumindest einem darin eingebetteten bzw. eingesponnenen Metalldraht besteht. Alternativ kann der elektrisch leitfähige Schuß- und/oder Kettfaden auch unmittelbar aus einem dünnen Metalldraht, beispielsweise einem Kupferdraht, bestehen. Derartige, gegebenenfalls mit isolierenden Fasern versponnene Metalldrähte sind robuster und flexibler als auf eine Folie aufgedruckte Leiterbahnen. Zudem lassen sich vorteilhafterweise Metallfäden bzw. -drähte herstellen, welche bezüglich ihrer Oberflächenbehandlung auf die besonderen Umgebungsbedingungen von Textilien spezifiziert sind. Insbesondere im Vergleich zu mit Druckverfahren hergestellten Spulen weisen Metalldrähte im allgemeinen eine höhere elektrische Leitfähigkeit auf.

Ein weiterer Vorteil im Vergleich zu durch Ätzverfahren strukturierten Spulen auf Folien ist ferner der geringere Metallverbrauch bei der Verwendung von Metalldrähten. Bei einer Herstellung von Leiterbahnen durch einen Ätzprozeß muß nämlich ein Großteil der Metallschicht zur Definition der Metallbahn entfernt werden und muß kostenverursachend aus der Ätzlösung zurückgewonnen werden. Wenn der Leiter beispielsweise als spiralförmige Spule für eine Antennenspule eines Transponder-ICs ausgelegt ist, so läßt sich durch die Erfindung eine Spule mit vergleichbarer Induktivität aber , erheblich erhöhter Güte herstellen. Vorzugsweise weist der Metalldraht eine elektrisch isolierende Ummantelung auf.

Gemäß einer weiteren bevorzugten Ausführungsform ist der Leiter nicht in dem textilen Träger, sondern an demselben angeordnet. Der Leiter weist hierzu vorzugsweise einen Metalldraht auf, welcher insbesondere eine elektrisch isolierende Ummantelung besitzen kann.

Vorzugsweise ist der Leiter ein elektrisch leitfähiges Garn, welches aus elektrisch isolierenden Fasern und zumindest einem darin eingebetteten bzw. eingesponnenen Metalldraht besteht. Ein derartiger Leiter wird durch den zusätzlichen Textilfaden zwar etwas voluminöser, bekommt aber auch einen stärkeren textilen Charakter. Beim Anschluß an das elektronische Bauelement ist in diesem Fall darauf zu achten, daß der (nicht elektrisch leitfähige) Textilfaden die Kontaktierung an den Metalldraht nicht stört.

Vorzugsweise ist der Leiter durch eine Klebeverbindung mit dem textilen Träger verbunden. Insbesondere kann der textile Träger mit einem Klebstoff, beispielsweise einem Schmelzkleber, beschichtet sein, welcher vorzugsweise ein Aufbügeln des Leiters ermöglicht. Falls es sich bei dem Leiter um ein elektrisch leitfähiges Garn handelt, kann dieses gegebenenfalls zusätzlich mit einem Klebstoff versehen sein, indem es beispielsweise mit Klebstoff getränkt wurde.

Bei dem Leiter kann es sich um eine elektrisch leitfähige Spule handeln, welche spiralförmig beispielsweise um einen Hohlkörper gewickelt und auf dem textilen Träger abgelegt und fixiert wurde.

Mit Vorteil kann ein zweiter textiler Träger derart an dem ersten textilen Träger angeordnet sein, daß der Leiter zwischen den Trägern eingebettet ist. Dieser Verband zweier textiler Träger mit dazwischen angeordnetem elektrischen Leiter ermöglicht einen besonders effizienten mechanischen Schutz des Leiters sowie eine hohe Belastbarkeit der erfindungsgemäßen Vorrichtung. Vorzugsweise ist auch das elektronische Bauelement zwischen den beiden textilen Trägern angeordnet.

Bei dem elektronischen Bauelement kann es sich um einen integrierten Schaltkreis (IC), insbesondere um einen Transponder-IC (sogenannter RFID-Chip) handeln. In Verbindung mit einem Leiter, welcher eine spiralförmige, elektrisch leitfähige Spule darstellt, kann so ein kontaktlos auslesbares Transpondersystem bereitgestellt werden, welches sich in hervorragender Weise in eine textile Umgebung integrieren läßt.

Das elektronische Bauelement ist vorzugsweise in einem Isolator eingebettet und an dem textilen Träger angebracht. Zweckmäßigerweise kommt bei dem Isolator ein wasserdichtes und weiches Material zum Einsatz.

Gemäß der Erfindung umfaßt ein Verfahren zur Herstellung einer Vorrichtung, insbesondere einer oben beschriebenen Vorrichtung, die Schritte:
- Bereitstellen zumindest eines textilen Trägers, an oder in welchem zumindest ein flexibler Draht- und/oder fadenartiger elektrischer Leiter angeordnet ist;
- elektrisches Verbinden einer Anschlußstelle des Leiters mit zumindest einem elektronischen Bauelement, wobei der textile Träger ein Gewebe ist und der Leiter jeweils zumindest einen elektrisch leitfähigen Schuß- und Kettfaden aufweist, wobei das Verfahren den Schritt des elektrischen Verbindens zumindest eines Schuß- mit einem Kettfaden an deren Kreuzungspunkt umfaßt, so daß der Leiter eine elektrisch leitfähige Spule bildet.

Gegenüber herkömmlichen "intelligenten Etiketten" weist eine erfindungsgemäße Vorrichtung folgende Vorteile auf:
- Die elektrische Leitfähigkeit eines verwendeten Metalldrahts in dem elektrisch leitfähigen drahtund/oder fadenartigen Leiter ist höher als diejenige von herkömmlich verwendeten Leiterbahnen auf Plastikfolien. Dies äußert sich beispielsweise in einer höheren Güte einer Antennenspule, welche durch den Leiter gebildet werden kann.
- Ein Materialverlust, welcher inhärent mit dem Herstellungsprozeß einer herkömmlichen Antennenspule verbunden ist, tritt bei einem erfindungsgemäßen Herstellungsverfahren nicht auf.
- Wenn der Leiter in Form einer Spule verwendet werden soll, gestattet eine erfindungsgemäße Vorrichtung das Herausführen der Spulenanschlüsse ohne eine "Rückkontaktierung" mit einer Brücke, wie sie bei herkömmlichen Spulen notwendig war.
- Im Gegensatz zu herkömmlichen Vorrichtungen ist keine Substratfolie notwendig, auf der die sonst üblichen Dickschichtprozesse aufgebracht wurden.
- Das erfindungsgemäße Herstellungsverfahren kann hochparallel von Spindeln abgespult werden.
- Das "textile Etikett" läßt sich hervorragend in eine textile Umgebung einbinden und läßt sich angenehm tragen, waschen und bügeln.
- Wenn ein Wasch- oder Herstelleretikett als Träger für den Leiter verwendet wird, ist kein zusätzlicher textiler Träger notwendig.

Die Erfindung wird im folgenden unter Bezugnahme auf bevorzugte Ausführungsformen anhand begleitender Zeichnungen beispielhaft beschrieben. Es zeigt:
- Fig. 1(a): eine schematische Darstellung eines Endlosgewebebandes, in welchem fadenartige Leiter in Kettrichtung sowie mit einem bestimmten Rapport in Schußrichtung eingebracht sind;
- Fig. 1(b): schematische Darstellung eines Ausschnitts aus dem in Fig. 1(a) gezeigten Gewebeband, wobei der fadenartige Leiter durch lokale Kontaktierungen eine elektrisch leitfähige Spule bildet;
- Fig. 2(a)-(d): schematische Darstellungen eines Kontaktierungsverfahrens eines draht- bzw. fadenartigen Leiters an Kontaktflächen eines elektronischen Bauelements;
- Fig. 3: schematische Darstellungen des kontaktierten und in einem Isolator eingegossenen elektronischen Bauelements; und
- Fig. 4: herkömmliches "intelligentes Etikett" mit einer Metallbahnspule auf Folienbasis.

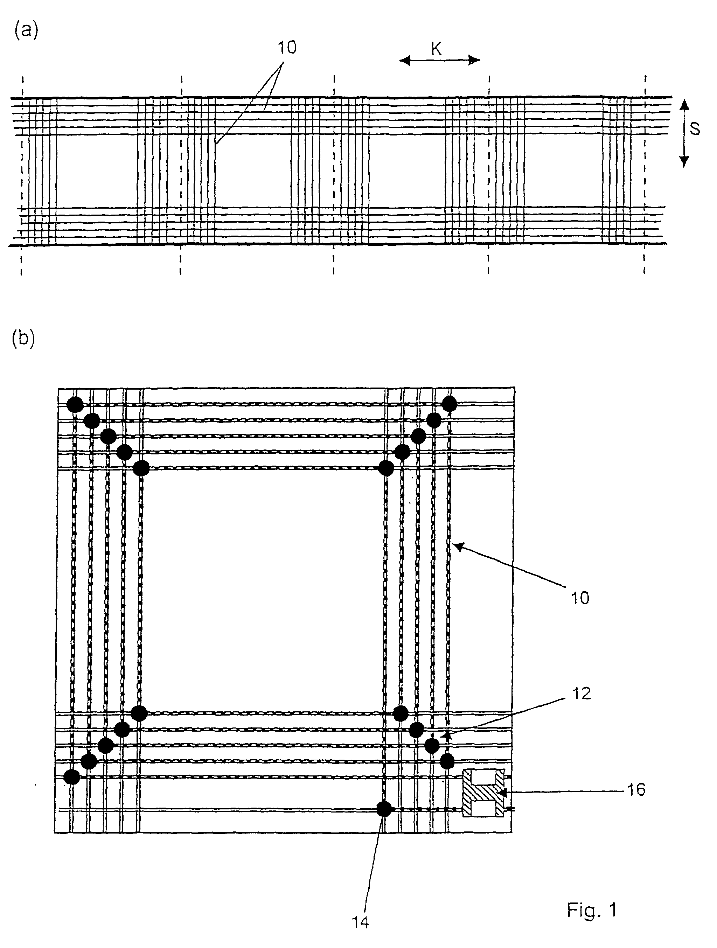

In Fig. 1(a) ist schematisch ein Endlosgewebeband gezeigt, in welchem beispielsweise auf einer Bandwebmaschine draht- bzw. fadenartige Leiter 10 eingewebt sind. Diese elektrisch leitfähigen Fäden erstrecken sich sowohl in Kettenrichtung K (Längsrichtung) sowie mit einem bestimmten Rapport in Schußrichtung S (Querrichtung). Eine derartige Anordnung kann auch zweidimensional auf einer flächigen Webmaschine hergestellt werden. Jeder der durch eine schwarze Linie angedeuteten Leiter 10 kann aus einem oder mehreren leitfähigen Fäden bestehen. Bei den Leitern 10 kann es sich auch um Garne handeln, bei welchen ein dünner Metalldraht mit zumindest einer isolierenden Faser, beispielsweise einer Kunstfaser, versponnen ist. Alternativ kann ein dünner Metalldraht auch direkt als drahtartiger Leiter eingesetzt werden.

In Fig. 1(b) ist ein Ausschnitt aus dem in Fig. 1(a) gezeigten Endlosband dargestellt. Durch geeignete lokale Kontaktierungen 12, welche in Fig. 1(b) als schwarze Punkte schematisch dargestellt sind, lassen sich an den Kreuzungspunkten die übereinander verlaufenden elektrisch leitfähigen Schuß- und Kettfäden 10 verbinden. Die Kontaktierungen 12 der einzelnen elektrischen Leiter 10 kann beispielsweise durch einen Stempel oder eine Walze, insbesondere durch Verschmelzen, Verlöten oder Verkleben der metallischen Leiter 10 eingeprägt werden. Durch die Kontaktierungen 12 wird in Fig. 1(b) ein spiralförmiger Leiter ausgebildet, welcher einen planaren Spulenaufbau aufweist. Zur besseren Verdeutlichung des elektrischen Leitungspfades ist in Fig. 1(b) die Spule durch eine gestrichelte Linie hervorgehoben.

Demgemäß werden durch die 4 x 5 Kontaktierungen 12 jeweils zwei Leiterbahnen, d.h. jeweils ein Schuß- mit einem Kettfaden 10, miteinander verbunden, so daß ein spiralförmiger Strompfad durch das Gewebe herausgebildet wird. Durch eine zusätzliche Kontaktierung 14 kann der Strompfad vom Inneren der Spule herausgeführt werden, ohne daß eine Brücke als "Rückverdrahtungsmittel" wie im Stand der Technik notwendig wäre. Die seitlich über die Spule herausragenden Leiterstücke der Leiter 10 haben keine Wirkung, da deren Enden offen sind und kein Strom fließen kann. Falls gewünscht, können die Ränder des Gewebes zusätzlich isoliert werden, was beispielsweise durch Eingießen bzw. Einschmelzen erfolgen kann. Außerdem können optional nicht benötigte Leitungsabschnitte mit einem Messer oder einer Stanze durchtrennt werden. An Anschlußstellen des Leiters 10, welche in diesem Fall die Anschlüsse der elektrisch leitfähigen Spule darstellen, wird ein Transponder-IC (RFID-Chip) angeschlossen.

Bei der soeben beschriebenen Ausführungsform einer erfindungsgemäßen Vorrichtung ist der Leiter 10 in dem textilen Träger angeordnet, in dem als Leiter 10 elektrisch leitfähige Schuß- bzw. Kettfäden des aus einem Gewebe bestehenden textilen Trägers Verwendung finden. Alternativ ist es jedoch gleichsam möglich, den Leiter aus einem dünnen, flexiblen, draht- und/oder fadenartigen Material zu erstellen, welches elektrisch leitfähig ist. Ein derartiger Leiter wird in einem nachfolgenden Herstellungssschritt an den textilen Träger beispielsweise mittels eines Klebeschritts angeordnet. Für einen solchen Leiter eignet sich besonders ein dünner Spulendraht, beispielsweise ein Kupferdraht, welcher mit Silber und Isolierlack ummantelt ist, wie er auch für herkömmliche Spulen und Transformatoren hergestellt und verwendet wird.

Um beispielsweise eine Antennenspule für einen Transponder-IC herzustellen, wird ein derartiger dünner Spulendraht vorzugsweise um einen Hohlkörper gewickelt, bei welchem mittels einer Haltevorrichtung der Drahtanfang und das -ende festgeklemmt werden. Unmittelbar anschließend werden der Drahtanfang und das -ende an dem Transponder-IC elektrisch leitend angebracht, wie später detailliert beschrieben werden wird. Anschließend kann der Transponder-IC mit einem Tropfen isolierenden, waschfesten und temperaturbeständigen Kunststoff vergossen und anschließend auf dem textilen Träger, welcher beispielsweise mit Schmelzkleber für Textilien beschichtet wurde, durch Abstreifen von der Wickeleinrichtung abgelegt werden. Durch kurzes Erhitzen und Andrücken wird der Transponder-IC mit der Spule auf dem textilen Träger fixiert. Der textile Träger mit dem so erstellten "intelligenten Etikett" kann nachfolgend in ein Textil eingebügelt werden und seine Funktion aufnehmen. Nach dem Aufbügelvorgang auf das Textil, bei welchem es sich beispielsweise um ein Bekleidungsstück oder ein Wäschestück handeln kann, ist die Spule mit dem Transponder-IC von beiden Seiten durch textiles Gewebe geschützt und braucht keine zusätzliche Kapselung mehr.

Es ist ebenfalls möglich, die Spule aus einem Textilfaden, in welchem ein Metalldraht eingesponnen ist, zu wickeln. Die Spule wird hierdurch zwar etwas voluminöser, bekommt aber einen stärkeren textilen Charakter. Beim Anschluß an den Chip ist in diesem Fall darauf zu achten, daß der Textilfaden die Kontaktierung an dem Metalldraht nicht stört. Gegebenenfalls ist sogar möglich, den Faden mit dem Textilkleber zu tränken und die Verbindung der einzelnen Leiter untereinander und mit dem textilen Träger über den Faden zu realisieren.

Als besonders geeignet für die verwendeten dünnen Metalldrähte haben sich Spulendrähte erwiesen, beispielsweise der Spulendraht TW-D mit einem Durchmesser von 40 µm des Unternehmens Elektro-Feindraht AG, Eschholzmatt, Schweiz. Dieser Kupferdraht ist versilbert und mit einem Polyamid-Isolierlack versehen. Er ist speziell für textile Anwendungen getestet und hat sich als waschbar sowie resistent gegen chemische Reinigungen und Temperaturen bis 100°C erwiesen.

Um eine Induktivität entsprechend einem herkömmlichen "smart label" gemäß Fig. 4 zu erzeugen, wird ein derartiger Draht vorzugsweise auf einer Wickeleinrichtung aufgewickelt. Bei der Wickeleinrichtung kann es sich beispielsweise um einen quaderförmigen Körper mit einer Kantenlänge von 2,7 cm oder um einem runden Zylinder mit einem Durchmesser von 3,04 cm handeln, auf welchen sieben Windungen des Kupferdrahts aufgewickelt werden. Die Wickeleinrichtung besitzt zwei Klammern, mit denen der Drahtanfang und das -ende fixiert werden können.

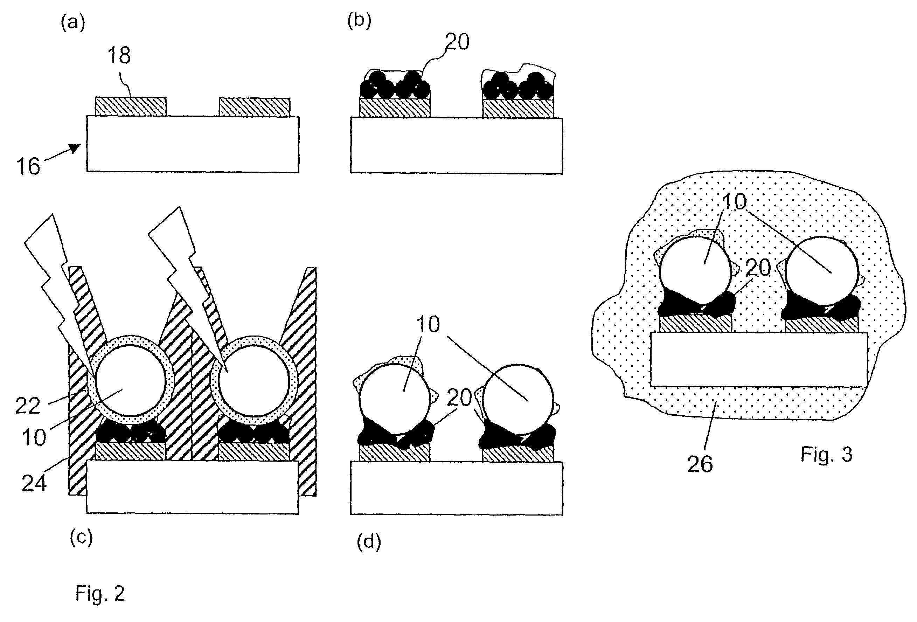

Auf der Wickeleinrichtung selbst wird der Transponder-IC an die Drahtenden kontaktiert, was in Fig. 2(a) bis (d) dargestellt ist. Vorteilhafterweise erfolgt dies dadurch, daß die Kontaktflächen 18 des Transponder-ICs 16 - wie in Fig. 2(b) dargestellt ist - mit einer niedrigschmelzenden Lotpaste 20 bedruckt werden. Die Lotpaste 20 kann beispielsweise aus Lotkügelchen und einem Flußmittel bestehen. Als Lot eignet sich insbesondere PbAgSn. Nachfolgend werden die Anschlußstellen des Leiters 10 auf den so vorbereiteten Kontaktflächen 18 des Transponder-ICs 16 angeordnet und beispielsweise mittels einer Gasflamme, eines Lasers oder eines Lichtbogens lokal erhitzt, bis das Lot schmilzt und sich mit dem Draht 10 verbindet. Der verwendete Leiter 10 weist eine Isolierummantelung 22 auf, welche durch die Wärmeeinwirkung (schematisch in Fig. 2(c) als Blitz dargestellt) entfernt wird. Während des Positionier- und Verbindungsvorgangs wird der Leiter 10 mittels Halteklammern 24 relativ zu den mit Lotpaste bedeckten Kontaktflächen 18 gehalten. Das Ergebnis der elektrischen und mechanischen Fixierung durch den Erhitzungsvorgang ist in Fig. 2(d) schematisch dargestellt.

Nachfolgend wird der so kontaktierte Transponder-IC durch Auftropfen einer Vergußmasse 26, die den Chip wasch- und bügelbeständig macht und mechanisch schützt, verkapselt. Für die Vergußmasse 26 eignet sich besonders ein wasserdichter und weicher Isolator. Der gewickelte Spulendraht 10 wird mit dem so vorbereiteten Transponder-IC 16 von der Wickeleinrichtung gestreift und auf einen textilen Träger aufgelegt, welcher vorzugsweise mit einer Lage Schmelzkleber für Textilien beschichtet ist. Durch kurzes Aufheizen und Andrücken wird die lose gewickelte Spule mit dem Chip auf dem textilen Träger fixiert. Die so vorbereitete bevorzugte erfindungsgemäße Vorrichtung kann nun auf ein Bekleidungsstück oder ein anderes Textil aufgebügelt werden. Die Spule mit dem Transponder-IC wird dann beidseitig von Textil geschützt und hält auch größeren mechanischen Belastungen stand. Der verwendete Leiter, vorzugsweise ein Spulendraht, ist derart flexibel, daß er sich dem Gewebe gut anpaßt und nicht abgeknickt werden kann.

Besonders bevorzugt wird die erfindungsgemäße Vorrichtung in eine bereits an dem Kleidungsstück angebrachte Hersteller- bzw. Materialetikettenlasche eingelegt, welche auf deren Innenflächen mit Textilkleber beschichtet wurde. Durch einen Andrück- und Heizvorgang kann die Spule mit dem Transponder-IC in der Etikettenlasche fixiert werden.

### Bezugszeichenliste

- 10: draht- bzw. fadenartige Leiter
- 12: Kontaktierungen von sich kreuzenden leitfähigen Schuß- und Kettfäden
- 14: Kontaktierung zur Herausführung des inneren Spulenanschlusses
- 16: elektronisches Baulement, z.B. ein Transponder-IC bzw. RFID-Chip
- 18: Kontaktflächen des elektronischen Bauelements
- 20: Lotpaste mit Lotkugeln und Flußmittel
- 22: Isolierummantelung des Leiters
- 24: Halteklammern bzw. -backen
- 26: Vergußmasse (weicher und wasserfester Isolator)
- K: Kettfäden des Gewebes bzw. des texilen Trägers
- S: Schußfäden des Gewebes bzw. des texilen Trägers

## Patentansprüche

1. Vorrichtung, insbesondere ein intelligentes Etikett, mit
- zumindest einem textilen Träger;
- zumindest einem flexiblen draht- und/oder fadenartigen elektrischen Leiter (10); und
- zumindest einem elektronischen Bauelement (16), welches mit einer Anschlußstelle des Leiters (10) elektrisch verbunden ist;
wobei der Leiter (10) an oder in dem texilen Träger angeordnet ist, wobei der textile Träger ein Gewebe ist,
**dadurch gekennzeichnet, daß**
das Gewebe zumindest einen elektrisch leitfähigen Schuß- und Kettfaden (S, K) aufweist und der Leiter (10) zumindest einen elektrisch leitfähigen Schuß- und Kettfaden (S, K) des Gewebes umfaßt,
welche an ihrem Kreuzpunkt derart elektrisch leitfähig verbunden sind, daß der Leiter (10) eine elektrisch leitfähige Spule bildet.

2. Vorrichtung nach Anspruch 1, wobei der Leiter (10) eine Vielzahl von elektrisch leitfähigen Schuß- und Kettfäden (S, K) umfaßt, welche teilweise an ihren Kreuzungspunkten (12, 14) derart elektrisch leitfähig verbunden sind, daß der Leiter (10) eine elektrisch leitfähige Spule bildet.

3. Vorrichtung nach Anspruch 2, wobei der Leiter (10) zwei die Spulenanschlüsse bildende Anschlußstellen aufweist, welche mit dem elektronischen Bauelement (16) elektrisch verbunden sind.

4. Vorrichtung nach einem der Ansprüche 1 bis 3, wobei der elektrisch leitfähige Schuß- und/oder Kettfaden (S, K) ein elektrisch leitfähiges Garn ist, welches aus elektrisch isolierenden Fasern und zumindest einem darin eingebetteten Metalldraht besteht.

5. Vorrichtung nach Anspruch 4, wobei der Metalldraht eine elektrisch isolierende Ummantelung (22) aufweist.

6. Vorrichtung nach Anspruch 1, wobei der Leiter (10) zumindest einen Metalldraht aufweist.

7. Vorrichtung nach Anspruch 6, wobei der Metalldraht (10) eine elektrisch isolierende Ummantelung (22) aufweist.

8. Vorrichtung nach Anspruch 6 oder 7, wobei der Leiter (10) ein elektrisch leitfähiges Garn ist, welches aus elektrisch isolierenden Fasern und zumindest einem darin eingebetteten Metalldraht besteht.

9. Vorrichtung nach Anspruch 6 bis 8, wobei der Leiter (10) durch eine Klebeverbindung mit dem textilen Träger verbunden ist.

10. Vorrichtung nach Anspruch 9, wobei der textile Träger mit einem Klebstoff, vorzugsweise einem Schmelzkleber, beschichtet ist.

11. Vorrichtung nach Anspruch 8 und 9 oder 10, wobei das elektrisch leitfähige Garn mit einem Klebstoff versehen ist.

12. Vorrichtung nach Anspruch 6 bis 11, wobei der Leiter (10) eine elektrisch leitfähige Spule bildet.

13. Vorrichtung nach Anspruch 6 bis 12, wobei ein zweiter textiler Träger derart an dem ersten textilen Träger angeordnet ist, daß der Leiter (10) zwischen den Trägern eingebettet ist.

14. Vorrichtung nach einem der vorangegangenen Ansprüche, wobei das elektronische Bauelement (16) ein integrierter Schaltkreis, insbesondere ein Transponder-IC, ist.

15. Vorrichtung nach einem der vorangegangenen Ansprüche, wobei das elektronische Bauelement (16) in einem Isolator (26) eingebettet und an dem textilen Träger angeordnet ist.

16. Verfahren zur Herstellung einer Vorrichtung mit den Schritten:
- Bereitstellen zumindest eines textilen Trägers, an oder in welchem zumindest ein flexibler draht- und/oder fadenartiger elektrischer Leiter (10) angeordnet ist;
- elektrisches Verbinden einer Anschlußstelle des Leiters (10) mit zumindest einem elektronischen Bauelement (16),
**dadurch gekennzeichnet, daß** der textile Träger ein Gewebe ist und der Leiter (10) jeweils zumindest einen elektrisch leitfähigen Schuß- und Kettfaden (S, K) aufweist und das Verfahren den Schritt des elektrischen Verbindens zumindest eines Schuß- mit einem Kettfaden (S, K) an deren Kreuzpunkt (12, 14) umfaßt, so daß der Leiter (10) eine elektrisch leitfähige Spule bildet.

17. Verfahren nach Anspruch 16, wobei der Leiter (10) eine Vielzahl elektrisch leitfähiger Schuß- und Kettfäden (S, K) aufweist, und das Verfahren den Schritt des teilweisen elektrischen Verbindens der Schuß- und Kettfäden (S, K) an ihren Kreuzungspunkten (12, 14) umfaßt, so daß der Leiter (10) eine elektrisch leitfähige Spule bildet.

18. Verfahren nach Anspruch 16 oder 17, wobei der Leiter (10) durch eine Klebeverbindung mit dem textilen Träger verbunden wird.

## Claims

1. Device, in particular a smart label, with
- at least one textile backing;
- at least one flexible wire-like and/or thread-like electrical conductor (10); and
- at least one electronic component (16), which is electrically connected to a connection point of the conductor (10);
the conductor (10) being arranged on or in the textile backing,
the textile backing being a woven fabric,
**characterized in that**
the woven fabric has at least one electrically conductive weft and warp thread (We, Wa) and the conductor (10) comprises at least one electrically conductive weft and warp thread (We, Wa) of the woven fabric, which are connected electrically conductively at their crossing point in such a way that the conductor (10) forms an electrically conductive coil.

2. Device according to Claim 1, the conductor (10) comprising a multiplicity of electrically conductive weft and warp threads (We, Wa), some of which are connected electrically conductively at their crossing points (12, 14) in such a way that the conductor (10) forms an electrically conductive coil.

3. Device according to Claim 2, the conductor (10) having two connection points, which form the coil connections and are electrically connected to the electronic component (16).

4. Device according to one of Claims 1 to 3, the electrically conductive weft and/or warp thread (We, Wa) being an electrically conductive yarn which comprises electrically insulating fibres and at least one metal wire embedded therein.

5. Device according to Claim 4, the metal wire having an electrically insulating sheathing (22).

6. Device according to Claim 1, the conductor (10) having at least one metal wire.

7. Device according to Claim 6, the metal wire (10) having an electrically insulating sheathing (22).

8. Device according to Claim 6 or 7, the conductor (10) being an electrically conductive yarn which comprises electrically insulating fibres and at least one metal wire embedded therein.

9. Device according to Claims 6 to 8, the conductor (10) being connected to the textile backing by an adhesive bond.

10. Device according to Claim 9, the textile backing being coated with an adhesive, preferably a hot-melt adhesive.

11. Device according to Claims 8 and 9 or 10, the electrically conductive yarn being provided with an adhesive.

12. Device according to Claims 6 to 11, the conductor (10) forming an electrically conductive coil.

13. Device according to Claims 6 to 12, a second textile backing being arranged on the first textile backing in such a way that the conductor (10) is embedded between the backings.

14. Device according to one of the preceding claims, the electronic component (16) being an integrated circuit, in particular a transponder IC.

15. Device according to one of the preceding claims, the electronic component (16) being embedded in an insulator (26) and arranged on the textile backing.

16. Method for producing a device with the steps of:
- providing at least one textile backing, on or in which at least one flexible wire-like and/or thread-like electrical conductor (10) is arranged;
- electrically connecting a connection point of the conductor (10) to at least one electronic component (16),
**characterized in that**
the textile backing is a woven fabric and the conductor (10) has in each case at least one electrically conductive weft and warp thread (We, Wa) and the method comprises the step of electrically connecting at least one weft thread (We) to a warp thread (Wa) at their crossing point (12, 14), so that the conductor (10) forms an electrically conductive coil.

17. Method according to Claim 16, the conductor (10) having a multiplicity of electrically conductive weft and warp threads (We, Wa), and the method comprising the step of electrically connecting some of the weft and warp threads (We, Wa) at their crossing points (12, 14), so that the conductor (10) forms an electrically conductive coil.

18. Method according to Claim 16 or 17, the conductor (10) being connected to the textile backing by an adhesive bond.

## Revendications

1. Dispositif, notamment une étiquette intelligente, avec
- au moins un support textile,
- au moins un fil flexible et/ou un genre de fil conducteur électrique (10) ; et
- au moins un composant électronique (16) relié électriquement à un point de raccordement du conducteur (10) ;
le conducteur (10) étant disposé sur ou dans le support textile, le support textile étant un tissu,
**caractérisé en ce que**
le tissu présente au moins un fil conducteur électrique de trame et de chaîne (S, K) et que le conducteur (10) comprend au moins un fil conducteur électrique de trame et de chaîne (S, K) du tissu,
ceux-ci étant reliés à leur point de croisement de manière électriquement conductrice de telle sorte que le conducteur (10) forme une bobine électriquement conductrice.

2. Dispositif selon la revendication 1, dans lequel le conducteur (10) comprend une multiplicité de fils conducteurs électriques de trame et de chaîne (S, K) qui sont partiellement reliés à leurs points de croisement (12, 14) de manière électriquement conductrice de telle sorte que le conducteur (10) forme une bobine électriquement conductrice.

3. Dispositif selon la revendication 2, dans lequel le conducteur (10) présente deux points de raccordement formant les raccordements de la bobine, reliés électriquement au composant électronique (16).

4. Dispositif selon une des revendications 1 à 3, dans lequel le fil conducteur électrique de trame et/ou de chaîne (S, K) est un filé conducteur électrique constitué de fibres électriquement isolantes et d'au moins un fil métallique qui y est noyé.

5. Dispositif selon la revendication 4, dans lequel le fil métallique présente un revêtement (22) électriquement isolant.

6. Dispositif selon la revendication 1, dans lequel le conducteur (10) présente au moins un fil métallique.

7. Dispositif selon la revendication 6, dans lequel le fil métallique (10) présente un revêtement (22) électriquement isolant.

8. Dispositif selon la revendication 6 ou 7, dans lequel le conducteur (10) est un filé conducteur électrique constitué de fibres électriquement isolantes et d'au moins un fil métallique qui y est noyé.

9. Dispositif selon les revendications 6 à 8, dans lequel le conducteur (10) est relié au support textile par collage.

10. Dispositif selon la revendication 9, dans lequel le support textile est recouvert d'une colle, de préférence d'une colle thermoplastique.

11. Dispositif selon les revendications 8 et 9 ou 10, dans lequel le filé conducteur électrique est recouvert d'une colle.

12. Dispositif selon les revendications 6 à 11, dans lequel le conducteur (10) forme une bobine électriquement conductrice.

13. Dispositif selon les revendications 6 à 12, dans lequel un deuxième support textile est disposé contre le premier support textile de telle sorte que le conducteur (10) est noyé entre les supports.

14. Dispositif selon une des revendications précédentes, dans lequel le composant électronique (16) est un circuit intégré, notamment un circuit intégré transpondeur.

15. Dispositif selon une des revendications précédentes, dans lequel le composant électronique (16) est noyé dans un isolant (26) et fixé contre le support textile.

16. Procédé de fabrication d'un dispositif avec les étapes de
- mise à disposition d'au moins un support textile, contre ou dans lequel se trouve au moins un fil flexible et/ou un genre de fil conducteur électrique (10) ;
- connexion électrique d'un point de raccordement du conducteur (10) avec au moins un composant électronique (16),
**caractérisé en ce que**
le support textile est un tissu et que le conducteur (10) présente respectivement au moins un fil conducteur électrique de trame et de chaîne (S, K) et que le procédé comprend l'étape de la connexion électrique d'au moins un fil conducteur électrique de trame avec un de chaîne (S, K) à leur point de croisement (12, 14) de telle sorte que le conducteur (10) forme une bobine électriquement conductrice.

17. Procédé selon la revendication 16, dans lequel le conducteur (10) présente une multiplicité de fils conducteurs électriques de trame et de chaîne (S, K) et le procédé comprend l'étape de la connexion électrique partielle des fils de trame et de chaîne (S, K) à leurs points de croisement (12, 14) de telle sorte que le conducteur (10) forme une bobine électriquement conductrice.

18. Procédé selon la revendication 16 ou 17, dans lequel on relie le conducteur (10) au support textile par collage.
